# EUROPEAN PATENT APPLICATION

(11) **EP 0 590 427 A1**
(43) Date of publication of application: **06.04.1994**
(21) Application number: 93114928.0
(22) Date of filing: 16.09.1993
(51) Int. Cl.: F16K 11/078, F16K 27/04

(54) **Gasket for water inflow and outflow openings in a single-control mixer cartridge for hot and cold water**

(30) Priority: 29.09.1992 IT MN920027
(71) Applicant: AMFAG S.r.l., I-46042 Castelgoffredo (Mantova) (IT)
(72) Inventor: Bosio, Orlando, I-46040 Casaloldo (Mantova) (IT)
(74) Representative: Modiano, Guido, Dr.-Ing.

(57) **Abstract**

Gasket (12,13,14) for water inflow (3,4) and outflow (5) openings in a single-control mixer cartridge for hot and cold water comprising a body (12a,13a,14a) made of elastic material which is arranged at the peripheral region of the openings (3,4,5) provided in the bottom (2) of the cartridge, characterized in that it comprises a ring (12b,13b,14b) with a limited axial extension made of rigid material and stably associated with the body made of elastic material.

## Description

The present invention relates to a gasket for water inflow and outflow openings in a single-control mixer cartridge for hot and cold water.

The great diffusion achieved in the field of faucets by devices known as mixer cartridges is known: these devices are inserted in faucets and allow, by operating a single actuation lever, to vary both the flow-rate delivered by the faucet and to vary the temperature of the delivered water by appropriately mixing the hot and cold water reaching said faucet.

These devices comprise a bottom provided with two openings for the separate inflow of hot and cold water and with an outflow opening for hot, cold or mixed water, and furthermore comprise a body associated with said bottom so as to form a portion of space suitable to contain a fixed plate, made of ceramic material, which is provided with holes corresponding to the openings of the bottom, and a movable plate, also made of ceramic material, which is in contact with the fixed plate and is shaped complementarily to the above mentioned actuation lever.

In order to ensure watertightness between the inflow and outflow openings provided in the bottom and the matching holes provided in the fixed plate, said openings are provided with gaskets which are associated with the peripheral region of said openings and are in contact with said plate; a very common embodiment of these gaskets entails the manufacture of said gaskets so as to form a monolithic body which is externally in contact with the wall of the openings and is internally affected by the water.

Said monolithic body is obviously made of an elastic material which must be chosen by the designer on the basis of a compromise between two opposite requirements, and more precisely: the need to prevent the gasket from being sucked in by the water flowing by it, with consequent removal of said gasket from its seat, guides the choice towards high values of gasket hardness, whereas optimum conditions of tightness and sliding between the plates of the cartridge would orientate the choice towards a particularly soft material.

In order to avoid renouncing the high softness which is optimum for the functionality of the cartridge without running the risk of gasket removal, the known art uses a jacket which is arranged inside the gasket and extends axially over almost all of the vertical extension of said gasket, but this jacket is not free from disadvantages related both to functionality and to correct placement.

The aim of the present invention is to provide a gasket which simultaneously offers optimum conditions as regards cartridge tightness and functionality and fully ensures position-keeping.

This aim is achieved by a gasket for water inflow and outflow openings in a single-control mixer cartridge for hot and cold water, according to the present invention, said gasket comprising a body made of elastic material which is arranged at the peripheral region of said opening provided in the bottom of said cartridge, so as to make contact with a fixed plate accommodated within said cartridge, characterized in that it comprises a ring with a limited axial extension, made of rigid material and stably associated with said body made of elastic material.

Further characteristics and advantages of the present invention will become apparent from the description of some preferred but not exclusive embodiments thereof, illustrated only by way of non-limitative example in the accompanying drawings, wherein:
figure 1 is a sectional view of a single-control mixer cartridge comprising the gaskets according to a first embodiment of the present invention;
figure 2 is a perspective view of the bottom and of the fixed plate of the cartridge of figure 1;
figure 3 is a front view of the outflow gasket of the cartridge of figures 1 and 2;
figure 4 is a sectional view, taken along the plane IV-IV of figure 3;
figure 5 is a front view of an outflow gasket according to a first further embodiment;
figure 6 is a sectional view, taken along the plane VI-VI of figure 5;
figure 7 is a front view of an outflow gasket according to a second further embodiment;
figure 8 is a sectional view, taken along the plane VIII-VIII of figure 7;
figures 9 and 10 are sectional views of yet another two further embodiments of the present invention.

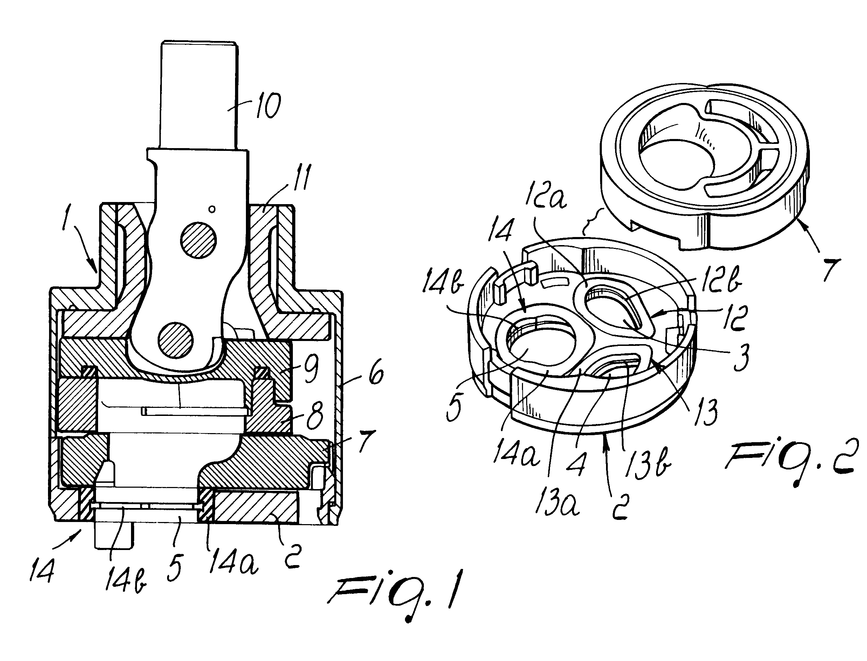

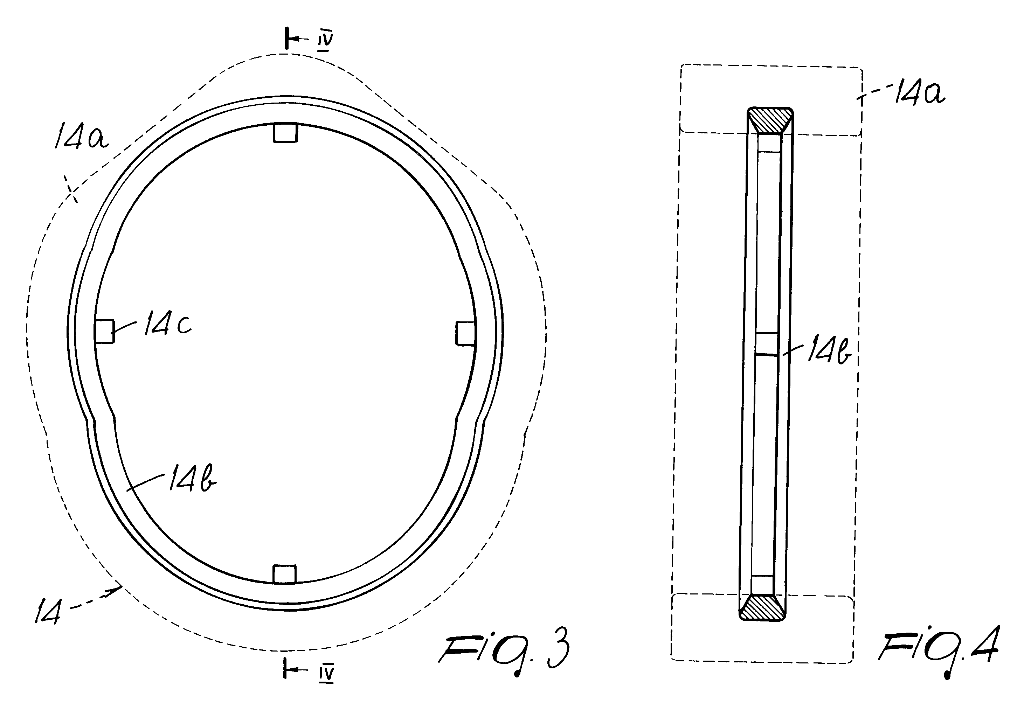

With reference to the above figures 1 to 4, the reference numeral 1 generally designates a mixer cartridge of the type described and claimed in the Italian patent application MN 92 A 000010 filed in the name of the same Applicant.

Said cartridge comprises the bottom 2 provided with the openings 3 and 4 for the separate inflow of hot and cold water and with the opening 5 for the outflow of hot, cold or mixed water; all of said openings are provided with related gaskets, described in detail hereinafter; the body 6 is associated with said bottom so as to form a portion of space containing a fixed plate 7, made of ceramic material and provided with holes which correspond to the openings of the bottom, and a movable plate 8, which is also made of ceramic material, internally forms a mixing chamber and is associated with the actuation lever 10 with the plate cover 9 interposed, said actuation lever 10 being pivoted on the rotating connector 11; in this manner it is possible to make the movable plate assume different positions with respect to the fixed plate, and it is well-known that the water flow-rate varies by moving the lever about its fulcrum, whereas the temperature of the water varies by rotating the connector.

An important characteristic of the present invention resides in the fact that the gaskets 12, 13 and 14, arranged respectively at the peripheral region of the inflow openings 3 and 4 and of the outflow opening 5, comprise a body 12a, 13a and 14a which is made of elastic material, such as rubber or silicone, to ensure watertightness between the bottom 2 and the fixed plate 7 by making contact therewith, and are provided with a ring made of rigid material, such as for example rigid plastic, has a limited extension in the direction of the axis of the openings, and is stably associated with the elastic body by molding in place at a median band of its internal peripheral region.

More precisely, the reference numerals 12b and 13b designate the rings associated respectively with the body 12a of the gasket 12 and with the body 13a of the gasket 13, and the reference numeral 14b designates the ring associated with the body 14a of the gasket 14; only the latter ring is shown in detail, with reference to figures 3 and 4, since the cross-section of the other two rings is identical.

Said figures 3 and 4 show that said ring 14b has a cross-section which is particularly favorable for the molding-in-place process, which embeds it in the rubber or silicone body 14a; said figures also show the presence of teeth, such as 14c, which simply have the purpose of keeping said ring in position during molding in place.

A synergistic relationship is thus produced between the rigid ring, such as 14b, and the elastic body, such as 14a, of the gasket according to the present invention; this relationship ensures the optimum condition of keeping the gasket in position, preventing it from being sucked in by the water which affects it, while allowing to produce the elastic body with a very soft kind of rubber or silicone which is in any case such as to optimize both watertightness conditions and the methods for producing the mutual movements of the components comprised within the cartridge.

Figures 5 and 6 illustrate a first further embodiment of the present invention, in which a rigid ring 15 is associated with the elastic body 16 by molding in place at the median band of the outer peripheral region of said body; figures 7 and 8 illustrate a second further embodiment of the present invention, in which the rigid ring 17 is associated with the elastic body 18 by molding in place at the median band of the median region of the thickness of said body.

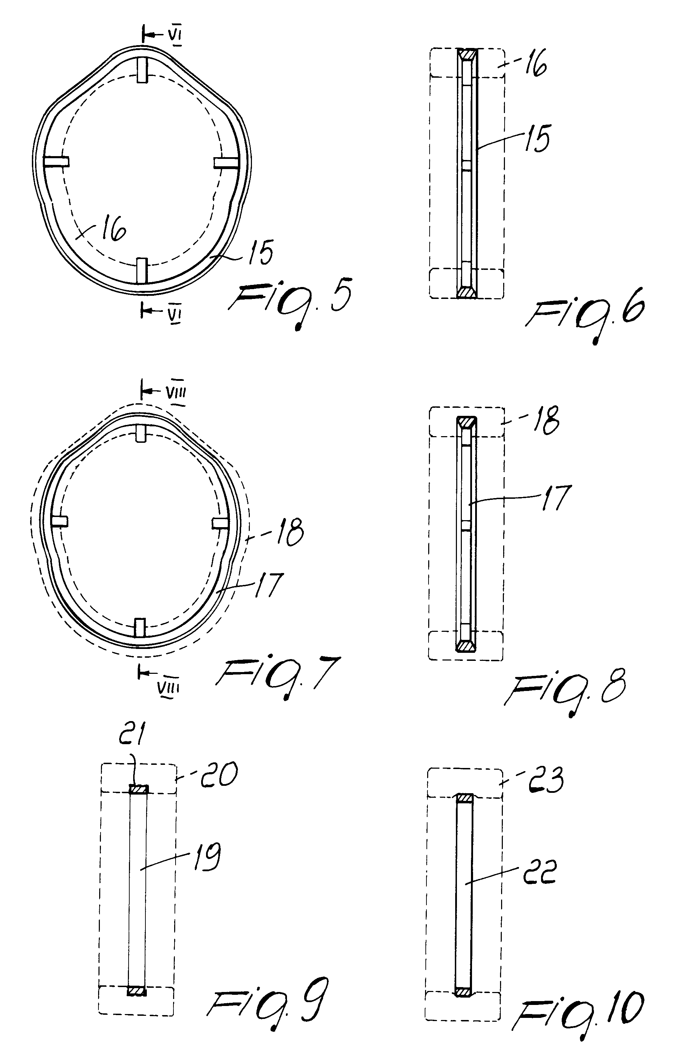

Figure 9 is a view of yet another embodiment of the present invention; according to this embodiment, a ring 19 made of rigid material is stably associated with the body 20 made of elastic material since it is inserted in the recess 21 provided at the internal wall of said body.

Figure 10 again illustrates yet another embodiment of the present invention, wherein a rigid ring 22 is stably associated with the elastic body 23 by forced keying, producing the deformation of said body shown in the figure; good functionality of the device is obtained by giving the rigid ring 22 an axial extension which is not greater than 30% of the total height of the elastic body.

In addition to those described, the present invention is susceptible to numerous other modifications and variations, all of which are within the scope of the inventive concept; thus, for example, the rigid ring may be associated with the elastic body in the manners described above, but may be arranged proximate to an end of said elastic body along its axial extension instead of at a median band.

In the practical embodiment of the invention, all the details may be replaced with other technically equivalent elements; furthermore, the materials employed, as well as the shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Gasket (12,13,14) for water inflow (3,4) and outflow (5) openings in a single-control mixer cartridge (1) for hot and cold water, said gasket comprising a body (12a,13a,14a) made of elastic material which is arranged at the peripheral region of said openings (3,4,5) provided in the bottom (2) of said cartridge (1), so as to make contact with a fixed plate (7) accommodated within said cartridge (1), characterized in that it comprises a ring (12b,13b,14b) with a limited axial extension which is made of rigid material and is stably associated with said body (12a,13a,14a) made of elastic material.

2. Gasket according to claim 1, characterized in that said rigid ring (12b,13b,14b) is stably associated with said elastic body (12a,13a,14a) in the median band of its axial extension.

3. Gasket according to claim 1, characterized in that said rigid ring (12b,13b,14b) is stably associated with the elastic body (12a,13a,14a) proximate to the end of the axial extension thereof.

4. Gasket according to one or more of the preceding claims, characterized in that said rigid ring (12b,13b,14b) is stably associated with the elastic body (12a,13a,14a) by molding in place.

5. Gasket according to one or more of the preceding claims, characterized in that said rigid ring (12b,13b,14b) is stably associated with the elastic body (12a,13a,14a) by molding in place at the internal peripheral region thereof.

6. Gasket according to one or more of the preceding claims, characterized in that said rigid ring (15) is stably associated with the elastic body (16) by molding in place at the outer peripheral region thereof.

7. Gasket according to one or more of the preceding claims, characterized in that said rigid ring (17) is stably associated with the elastic body (18) by molding in place at the median region thereof.

8. Gasket according to one or more of the preceding claims, characterized in that said rigid ring (19) is stably associated with the elastic body (20) since it is inserted in a recess (21) formed at the inner wall thereof.

9. Gasket according to one or more of the preceding claims, characterized in that said rigid ring (22) is stably associated with the elastic body (23) by forced keying.

10. Gasket according to one or more of the preceding claims, characterized in that said rigid ring (22) is stably associated with the elastic body (23) by forced keying and has an axial extension comprised between 5% and 30% of the height of the elastic body.
